# EUROPÄISCHE PATENTSCHRIFT

(11) **EP 3 681 955 B1**
(45) Veröffentlichungstag und Bekanntmachung des Hinweises auf die Patenterteilung: **04.01.2023**
(21) Anmeldenummer: 18766122.8
(22) Anmeldetag: 14.08.2018
(51) Int. Cl.: C09D 4/00

(54) **RECYCLING-FÄHIGE BESCHICHTUNGEN UND DEREN VERWENDUNG ZUR BEDRUCKUNG VON WIEDERVERWERTBAREN KUNSTSTOFFEN**
RECYCLABLE COATINGS AND USE THEREOF FOR PRINTING REUSABLE PLASTICS
REVÊTEMENTS RECYCLABLES ET LEUR UTILISATION POUR IMPRIMER DES PLASTIQUES RECYCLABLES

(30) Priorität: 10.09.2017 DE 102017008456
(43) Veröffentlichungstag der Anmeldung: 22.07.2020
(73) Patentinhaber: Mankiewicz Gebr. & Co. (GmbH & Co. KG), 21107 Hamburg (DE)
(72) Erfinder: DE ROSSI, Umberto, 22844 Norderstedt (DE); BOLENDER, Oliver, 20251 Hamburg (DE); STEFFEN, Timo, 21244 Buchholz (DE)
(86) Internationale Anmeldenummer: PCT/DE2018/100711
(87) Internationale Veröffentlichungsnummer: WO 2019/047994

(56) Entgegenhaltungen:
- CN-A- 106 519 919
- JP-A- 2004 182 914
- KR-A- 20110 078 320
- US-A1- 2008 255 263
- US-A1- 2014 370 254

## Beschreibung

Die vorliegende Erfindung betrifft recycling-fähige Beschichtungen und Beschichtungssysteme für Kunststoffe, die in den üblichen Recycling-Verfahren ohne zusätzlichen Aufwand von den wiederverwertbaren Kunststoffen abgetrennt werden können. Die Erfindung betrifft auch Verfahren zur Herstellung der erfindungsgemäßen Beschichtungen mittels Inkjet-Druckverfahren, die vor allem zur Bedruckung von Formbehältern aus Polyethylenterephthalat geeignet sind.

Polyethylenterephthalat (abgekürzt: PET) wird aufgrund seiner Eigenschaften unter anderem für Verpackungen und Formbehälter wie beispielsweise Behälter für Kosmetikprodukte und Lebensmittel eingesetzt. Im Lebensmittelbereich werden hauptsächlich Einweg- und Mehrweg-Getränkeflaschen aus Polyethylenterephthalat (abgekürzt: PET-Flaschen) eingesetzt.

PET-Flaschen und andere Verpackungsmaterialien aus PET werden zum großen Teil aufbereitet und wiederverwertet. In den üblichen Recycling-Prozessen wird das Material zu Flakes zerkleinert, von Fremdstoffen gereinigt, nach Farben sortiert und zu Granulat aufbereitet. Das so erhaltene Granulat kann wieder für Herstellung von Getränkeflaschen verwendet werden ("bottle to bottle"-Recycling). Im Reinigungsschritt müssen Fremdstoffe wie Verschmutzungen, Etiketten oder Aufdrucke komplett vom Substrat abgelöst und entfernt werden. Dies bedeutet, dass direkt auf das PET-Substrat aufgebrachte Druckschichten mit dem üblichen Reinigungsschritten entfernbar sein müssen, um die etablierten Recycling-Prozesse nicht zu stören.

Aus WO 2012/003186 ist ein UV-härtendes Beschichtungssystem für recycling-fähige Kunststoffe bekannt, welches mittels Inkjet-Druckverfahren direkt auf PET-Substrate aufgedruckt wird. Die Basisschicht dieses Systems ist dabei aus hydrophilen und aciden Oligomeren und Monomeren hergestellt, welche in den üblichen Reinigungsschritten des Recycling-Prozesses im Wasser aufquellen und die weiteren Schichten enthaften. Die Unbeständigkeit dieses Beschichtungssystems gegenüber Feuchtigkeit und Wasser, die im Recycling-Prozess vorteilhaft ist, ist im alltäglichen Gebrauch jedoch nachteilig. Weitere durch Strahlung vernetzbare Beschichtungen sind aus KR-A-2011/783201, JP-A-2004/182914, CN-A-106519919, US-A-2014/370254 und US-A-2008/255263 bekannt.

Es ist daher Aufgabe der vorliegenden Erfindung verbesserte Beschichtungen für recycling-fähige Kunststoffsubstrate zur Verfügung zu stellen, welche mittels Inkjet-Druckverfahren hergestellt werden können. Gelöst wird diese Aufgabe durch Beschichtungsstoffe zur Herstellung eines Primers gemäß Hauptanspruch sowie Beschichtungssysteme und Verfahren zu ihrer Herstellung gemäß Nebenansprüchen. Weitere Ausführungsformen werden in den Unteransprüchen und der Beschreibung offenbart.

Erfindungsgemäß werden die Primerbeschichtungen aus UV-härtenden Beschichtungsstoffen hergestellt, welche zumindest
60 bis 80 Gew.-% ein oder mehrere difunktionelle, alkoxylierte Acrylat-Monomere,
5 bis 15 Gew.-% ein oder mehrere Acrylat-Oligomere,
5 bis 15 Gew.-% ein oder mehrere carbonylfunktionelle Acrylat-und/oder Methacrylat-Oligomere oder Polyethylenglycol-Acrylate und/oder Polyethylenglycol-Methacrylate,
und 1 bis 10 Gew.-% ein oder mehrere Photoinitiatoren, jeweils bezogen auf das Gesamtgewicht des Beschichtungsstoffs, aufweisen.

Weiterhin können die Primerbeschichtungsstoffe Tenside aufweisen. Geeignete Tenside sind modifizierte Poly(organo)siloxane und polyethersubstituierte Polysiloxane. Die Tenside werden erfindungsgemäß in Mengen bis zu 1 Gew.-%, bevorzugt von 0,1 bis 0,75 Gew.-%, bezogen auf das Gesamtgewicht des Beschichtungsstoffs eingesetzt.

Weiterhin können die Primerbeschichtungsstoffe bis zu 10 Gew.-%, bevorzugt 3 bis 7 Gew.-%, ein oder mehrere Weißpigmente bezogen auf das Gesamtgewicht des Beschichtungsstoffs enthalten, ohne dass die geforderten Eigenschaften beeinträchtigt werden. Der Vorteil weiß eingefärbter Primerbeschichtungen ist, dass die übliche weiße Tintenbeschichtung, welche zur Verbesserung des Druckbilds häufig unter dem Farbaufdruck angebracht wird, eingespart werden kann. Geeignete Weißpigmente sind Titandioxid, Lithopone, Zinkoxid und Zinksulfid. Bevorzugte Pigmente sind Titandioxid und Zinksulfid.

Geeignete difunktionelle, alkoxylierte Acrylat-Monomere sind ethoxylierte und propoxylierte Acrylat-Monomere. Bevorzugte Acrylat-Monomere sind Dipropylenglycoldiacrylat DPGDA, Tripropylenglycoldiacrylat TPGDA, Tetraethylenglycoldiacrylat TTEGDA und deren Gemische. Die difunktionellen, alkoxylierten Acrylat-Monomere werden erfindungsgemäß bevorzugt in Mengen von 60 bis 87 Gew.-%, besonders bevorzugt 62 bis 70 Gew.-%, bezogen auf das Gesamtgewicht des Beschichtungsstoffs eingesetzt.

Geeignete Acrylat-Oligomere sind Epoxyacrylate, Urethanacrylate und Polyetheracrylate. Bevorzugt sind aliphatische Epoxyacrylate, Urethanacrylate und Polyetheracrylate. Die Acrylat-Oligomere werden erfindungsgemäß bevorzugt in Mengen von 8 bis 13 Gew.-%, besonders bevorzugt 9 bis 11 Gew.-%, bezogen auf das Gesamtgewicht des Beschichtungsstoffs eingesetzt.

Geeignete carbonyl-funktionelle Acrylat- und Methacrylat-Oligomere sind carboxy-funktionelle Acrylat- und Methacrylat-Oligomere sowie carboxylat-funktionelle Acrylat-und Methacrylat-Oligomere. Geeignete Polyethylenglycol-Acrylate sind Polyethylenglycoldiacrylate wie PEG(200)DA, PEG(400)DA und PEG(600)DA. Die bevorzugte Molmasse (Zahlenmittel) der PEG-Struktur in dem acrylatfunktionellen Oligomer beträgt 100 bis 2000, besonders bevorzugt 150 bis 1000, ganz besonders bevorzugt 200 bis 600 Dalton. Die carbonylfunktionelle Acrylat- und/oder Methacrylat-Oligomere werden erfindungsgemäß bevorzugt in Mengen von 6 bis 14 Gew.-%, besonders bevorzugt 8 bis 12 Gew.-%, bezogen auf das Gesamtgewicht des Beschichtungsstoffs eingesetzt. Die Polyethylenglycol-Acrylate und/oder Polyethylenglycol-Methacrylate werden erfindungsgemäß bevorzugt in Mengen von 6 bis 14 Gew.-%, besonders bevorzugt 8 bis 12 Gew.-%, bezogen auf das Gesamtgewicht des Beschichtungsstoffs eingesetzt.

Geeignete Photoinitiatoren sind (1-Hydroxycyclohexyl)phenyl-keton, 2-Hydroxy-2-methylpropiophenon, 1-[4-(2-Hydroxyethoxy)-phenyl]-2-hydroxy-2-methyl-1-propan-1-on, 2-Hydroxy-1-{4-[4-(2-hydroxy-2-methyl-propionyl)-benzyl]-phenyl}-2-methylpropan-1-on, 2-Benzyl-2-dimethylamino-1-(4-morpholinophenyl)-butanon-1, 2,4,6-Trimethylbenzoyl)-phenylphosphinoxid, Phenylglycoxylsäuremethylester, Ethyl-2,4,6-Trimethylbenzoyl-diphenyl-phosphinat, 2,4-Diethylthioxanthone, 1-Chlor-4-propoxythio-xanthon. Bevorzugte Photoinitiatoren sind Bis(2,4,6-trimethylbenzoyl)-phenylphosphinoxid, 2,4,6-Trimethylbenzoyldiphenylphosphinoxid und 2-Hydroxy-1-{4-[4-(2-hydroxy-2-methyl-propionyl)-benzyl]-phenyl}-2-methylpropan-1-on. Die Photoinitiatoren werden erfindungsgemäß bevorzugt in Mengen von 1,2 bis 8 Gew.-% bezogen auf das Gesamtgewicht des Beschichtungsstoffs eingesetzt.

Darüber hinaus können die Primerbeschichtungsstoffe die dem Fachmann bekannten und geläufigen Hilfsstoffe und Additive enthalten wie beispielsweise Polymerisationsinhibitoren und Entschäumer.

Aus den erfindungsgemäßen Beschichtungsstoffen werden Beschichtungen hergestellt, welche als Primerschicht in recycling-fähigen Beschichtungssystemen zur Dekoration von Kunststoffoberflächen eingesetzt werden. Im Folgenden wird unter dem Begriff Primerschicht die erste Schicht eines Beschichtungssystems verstanden, die auf ein Substrat aufgebracht wird.

Eine weitere Ausführungsform der vorliegenden Erfindung sind daher Beschichtungssysteme aus einer Primerschicht und einer Musterschicht. Die Primerschicht enthält dabei ein oder mehrere Beschichtungen, welche aus zumindest einem Primerbeschichtungsstoff hergestellt sind. Die Musterschicht enthält ein oder mehrere Tintenbeschichtungen, welche aus zumindest einer Tinte hergestellt sind. Zur Herstellung der Tintenbeschichtungen werden ein oder mehrere UV-härtende Tinten eingesetzt, welche für das Inkjet-Druckverfahren geeignet sind. Die Inkjet-Tinten enthalten Pigmente, Oligomere, Photoinitiatoren und Reaktivverdünner. Zusätzlich können sie die dem Fachmann bekannten und geläufigen Additive enthalten.

Die erfindungsgemäße Primerbeschichtungen enthalten acide und hydrophile Gruppen. Diese wirken in alkalischer Lösung als "Sollbruchstellen" zwischen Primer und Substrat. Unter den gängigen alkalischen Bedingungen der Waschprozesse, denen die Kunststoffflakes zur Reinigung im Recycling-Prozess unterworfen sind, löst sich das erfindungsgemäße Beschichtungssystem vom Substrat komplett ab. Dabei kann es relativ zusammenhängend aus dem Waschprozess entfernt werden, so dass eine Verschleppung in die anschließenden Verfahrensschritte verhindert wird.

Üblicherweise werden Inkjet-Druckverfahren nicht zum direkten Bedrucken recycling-fähiger PET-Formbehälter eingesetzt. Diese Verfahren werden vielmehr zum Bedrucken von Etiketten eingesetzt, welche dann auf die Kunststoffbehälter aufgebracht werden. Die bisher bekannten Beschichtungssysteme zur direkten Bedruckung weisen weder die erforderliche Ausgangshaftung am Substrat noch die erforderliche Wasserbeständigkeit auf.

Eine Ausführungsform der vorliegenden Erfindung ist ein Verfahren zur Bedruckung von recycling-fähigen Kunststoffsubstraten mittels Inkjet-Druckverfahren, welches die folgenden Schritte aufweist:
(a) Applikation von zumindest einem erfindungsgemäßen Primerbeschichtungsstoff mittels Inkjet-Druckverfahren,
(b) Pinning der Primerbeschichtung durch Bestrahlung mit UV-Strahlung,
(c) Applikation von zumindest einer UV-härtenden Tinte mittels Inkjet-Druckverfahren,
(d) Aushärten aller Beschichtungen durch Bestrahlung mit UV-Strahlung.

Die UV-härtenden Primerbeschichtungsstoffe und Tinten werden mit handelsüblichen Inkjet-Druckern appliziert, insbesondere mit Druckern, die zur industriellen Bedruckung von Formkörpern geeignet sind. Zur Erzeugung der UV-Strahlung können UV-Leuchtdioden (LED) oder Quecksilberdampflampen eingesetzt werden.

Unter den Begriffen Angelieren und Pinning wird im Folgenden die Fixierung eines Beschichtungsstoffs durch eine Vorreaktion verstanden. Der Beschichtungsstoff wird angeliert, d.h. er wird soweit vorgehärtet, dass er nicht mehr flüssig ist und schon eine hinreichend feste Beschichtung ausbildet. Diese ist jedoch noch nicht vollständig durchgehärtet. Pinning verhindert unerwünschte Verläufe der flüssigen Beschichtungsstoffe und verbessert die Haftung der vollständig ausgehärteten Beschichtungen untereinander.

Zum Angelieren oder Pinning in Schritt (b) werden als Strahlungsquelle LED-Strahler eingesetzt, welche Strahlung einer Wellenlänge von 385 oder 395 nm abgeben. Die Leistung liegt bei 2 bis 5 W. Es wird mit einer Dosis im Bereich von 20 bis 100 mJ/cm² bestrahlt.

In einer bevorzugten Ausführungsform kann zur Verbesserung des Druckbilds vor dem Aushärten des gesamten Schichtaufbaus in Schritt (d) eine weitere Tintenschicht, bevorzugt eine weiße Tintenschicht, appliziert und angeliert werden.

Im letzten Schritt (d) wird der gesamte Schichtaufbau aus Primerschichten und Tintenschichten durch Bestrahlung mit Strahlung im Wellenlängenbereich zwischen 450 und 180 nm vollständig ausgehärtet. Die eingesetzte Strahlung kann beispielsweise durch UV-Leuchtdioden (LED) oder Quecksilberdampflampen erzeugt werden. Bevorzugt werden Quecksilber-Mitteldrucklampen mit einer Leistung von 200 bis 500 W/cm eingesetzt. Es wird bevorzugt mit einer Dosis im Bereich von 500 bis 2000 mJ/cm² bestrahlt.

Das erfindungsgemäße Verfahren ist insbesondere zur Bedruckung von PET-Substraten, insbesondere zur Bedruckung von Formkörper zur Lebensmittelverpackung wie Getränkeflaschen geeignet. Die PET-Substrate können vor der Bedruckung vorbehandelt werden beispielsweise durch Beflammen oder durch eine PlasmaVorbehandlung. Dadurch wird die optische Anmutung wie Verlauf und Druckbild der Beschichtung verbessert. Auch eine bessere Haftung an das Substrat wird erreicht.

Das erfindungsmäße Verfahren kann in Fertigungslinien integriert werden. Da der Primer ebenso wie die Inkjet-Tinten mittels Inkjet-Druckverfahren appliziert werden, kann bei in-line-Verfahren mit einem Druckmodul gearbeitet werden.

### Beispiel

Beispielrezepturen Primerbeschichtungsstoffe

| | **Beispiel 1** | **Beispiel 2** |
|---|---|---|
| **Bestandteil** | **Menge [Gew.-%]** | **Menge [Gew.-%]** |
| Dipropylenglycoldiacrylat | 0,0 | 64,0 |
| Tripropylenglycoldiacrylat | 69,8 | 0,0 |
| monofunktionelles aliphatisches Epoxyacrylat | 10,0 | 10,0 |
| difunktionelles Säureacrylat | 15,0 | 0,0 |
| Polyethylenglycol(400)diacrylat | 0,0 | 10,0 |
| 2-Hydroxy-1-{4-[4-(2-hydroxy-2-methyl-propionyl)-benzyl]-phenyl}-2-methylpropan-1-on | 1,0 | 2,0 |
| 2,4,6-Trimethylbenzoyldiphenylphosphinoxid | 2,0 | 3,0 |
| Bis(2,4,6-trimethylbenzoyl)-phenylphosphinoxid | 2,0 | 2,0 |
| Siliconpolyetheracrylat | 0,2 | 0,2 |
| Pigment White 7 | 0,0 | 7,8 |
| polymeres Dispergieradditiv | 0,0 | 1,0 |

Druckverfahren:
Zur Bedruckung wurde eine handelsübliche Inkjet-Druckanlage für Rotationskörper mit einem Druckkopf-Typ Konica Minolta KM1024 eingesetzt. Es wurden handelsübliche PET-Rundflaschen bedruckt, wobei 200 Flaschen mit Primerbeschichtungen nach Beispiel 1 und 200 Flaschen mit Primerbeschichtungen nach Beispiel 2 bedruckt wurden. Zunächst wurde die Primerbeschichtungsstoffe mit einer Auflösung vom 360 x 360 dpi bei einer Druckgeschwindigkeit von 15 m/min aufgedruckt. Danach wurde ein Pinning der aufgedruckten Beschichtungen durch einen LED-Strahler mit 2 W Leistung bei einer Wellenlänge von 395 nm durchgeführt. Auf die angelierten Primerbeschichtungen wurden handelsübliche weiße UV-härtende Inkjet-Tinten mit einer Auflösung vom 360 x 360 dpi und einer Druckgeschwindigkeit von 15 m/min aufgedruckt. Danach wurde ein Pinning der aufgedruckten Beschichtungen durch einen LED-Strahler mit 2 W Leistung bei einer Wellenlänge von 395 nm durchgeführt. Auf die angelierten weißen Tintenbeschichtungen wurden handelsübliche UV-härtende Inkjet-Farbtinten mit einer Auflösung vom 360 x 360 dpi und einer Druckgeschwindigkeit von 15 m/min aufgedruckt. Anschließend wurden alle aufgedruckten und angelierten Beschichtungen durch die Bestrahlung mit einer Quecksilber-Mitteldrucklampe mit einer Leistung von 270 W/cm vollständig ausgehärtet.

Bestimmung der Kratzbeständigkeit:
Dabei wurde ein mit einem Gewicht belasteter Ritzstichel (Erichsen-Spitze 435S) mit der Spitze auf die zu prüfende Beschichtung aufgesetzt und senkrecht auf der zu prüfenden Fläche stehend über die Fläche gezogen. Anschließend wurde visuell beurteilt, ob die geprüfte Beschichtung eine Kratzspur aufweist. Die maximale Gewichtskraft, mit der der Ritzstichel belastet werden kann, ohne dass die Beschichtung bei der Prüfung verletzt wird, ist ein Maß für die Kratzbeständigkeit der Beschichtung. Ergebnisse von mehr als 10 Newton Gewichtskraft werden als gut bewertet.

Bestimmung der Haftung (Gitterschnitt-Test):
Für einen Gitterschnitt werden sechs parallele Schnitte mit einem Cuttermesser auf der Beschichtung der Probekörper aufgebracht. Die Schnitte in die Beschichtung sind dabei so tief, dass sie bis auf die Substratoberfläche gehen, ohne diese zu verletzen. Anschließend werden sechs weitere parallele Schnitte angebracht, die senkrecht zu den ersten verlaufen und mit diesen ein gleichmäßige Quadrat oder Gitter bilden. Der Rasterabstand beträgt dabei 1 mm. Auf das entstandene Quadrat wird ein Klarschicht- oder Kreppbandstreifen mit einer Klebekraft von 8 bis 10 N/25 mm aufgeklebt. Diese wird in einer Zeit von 0,5 bis 1 s in einem Winkel von 60° abgezogen. Dann wird das Gitter bzw. die Beschichtung visuell ausgewertet. Der Gitterschnittkennwert GT 0 entspricht dabei einer sehr guten Haftfestigkeit, der Kennwert GT 5 entspricht einer sehr schlechten Haftung.

Bestimmung der Haftfestigkeit (Tape Test):
Auf den beschichteten Probekörper wird ein Klebebandstreifen (Typ Tesa-Film 57370-00002) mit leichtem Druck und ohne Luftblaseneinschluss auf die zu prüfende Beschichtung aufgebracht. Es wird 10 Sekunden gewartet und der Klebebandstreifen in einem Winkel von 60° abgezogen und visuell beurteilt. Das Ergebnis ist in Ordnung, wenn keinerlei Anhaftungen auf dem Klebebandstreifen zu erkennen sind.

Bestimmung der Wasserbeständigkeit:
Der beschichtete Probekörper wird für 15 Minuten bei 20°C vollständig in destilliertes Wasser eingetaucht. Anschließend wird die Beschichtung sofort nach Entnahme des Probekörpers aus dem Wasser, also ohne Rekonditionierung, auf Kratzfestigkeit und Haftung (Tape-Test und Gitterschnitt-Test) geprüft.

Recycling-Test:
Die bedruckten PET-Flaschen wurden zu Flakes geschreddert. 500 g der Flakes wurden mit 2 l einer alkalischen Waschlösung vermischt. Die Waschlösung wurde hergestellt aus 2 l Wasser, 20 g Natriumhydroxid und 6 g Tensid (Triton X100 Handelsprodukt der Firma Dow Chemicals). Die Mischung wurde 15 Minuten bei 88 °C mit 1000 U/min gerührt und anschließend filtriert. Der Grad der Ablösung der Bedruckung von den Flakes wurde visuell bewertet.

Die Ergebnisse der Prüfungen sind in folgenden Tabellen 1 und 2 zusammengefasst.

**Tabelle 1: Ergebnisse Bespielrezeptur 1**

| Prüfung | Ergebnis direkt nach Aushärtung | Ergebnis nach Wassereinlagerung |
|---|---|---|
| Kratzbeständigkeit | > 10 N | > 10 N |
| Gitterschnitt-Test | GT 0 | GT 0 |
| Tape-Test | keine Anhaftungen | keine Anhaftungen |
| Recycling-Test | vollständige Ablösung | vollständige Ablösung |

**Tabelle 2: Ergebnisse Beispielrezeptur 2**

| Prüfung | Ergebnis direkt nach Aushärtung | Ergebnis nach Wassereinlagerung |
|---|---|---|
| Kratzbeständigkeit | > 10 N | > 10 N |
| Gitterschnitt-Test | GT 0 | GT 0 |
| Tape-Test | keine Anhaftungen | keine Anhaftungen |
| Recycling-Test | vollständige Ablösung | vollständige Ablösung |

Die erfindungsgemäßen Primerbeschichtungen führen zu kratzbeständigen und wasserfesten Beschichtungen, die in den üblichen Reinigungsschritten der Recyclingprozesse vollständig abgelöst werden können.

## Patentansprüche

1. Beschichtungstoff zur Herstellung einer UV-härtbaren Primerbeschichtung aufweisend zumindest
60 bis 80 Gew.-% ein oder mehrere difunktionelle, alkoxylierte Acrylat-Monomere,
5 bis 15 Gew.-% ein oder mehrere Acrylat-Oligomere,
5 bis 15 Gew.-% ein oder mehrere carbonylfunktionelle Acrylat- und/oder Methacrylat-Oligomere oder Polyethylenglycol-Acrylate und/oder Polyethylenglycol-Methacrylate und
1 bis 10 Gew.-% ein oder mehrere Photoinitiatoren jeweils bezogen auf das Gesamtgewicht des Beschichtungsstoffs.

2. Beschichtungsstoff nach Anspruch 1, **dadurch gekennzeichnet, dass** der Beschichtungsstoff weiterhin bis zu 1 Gew.-% ein oder mehrere Tenside bezogen auf das Gesamtgewicht des Beschichtungsstoff aufweist.

3. Beschichtungsstoff nach Anspruch 2, **dadurch gekennzeichnet, dass** die Tenside Poly(organo)siloxane und/oder polyethersubstituierte Polysiloxane sind.

4. Beschichtungsstoff nach einem der Ansprüche 1 bis 3,
**dadurch gekennzeichnet, dass** der Beschichtungstoff weiterhin bis zu 10 Gew.-% ein oder mehrere Weißpigmente bezogen auf das Gesamtgewicht des Beschichtungsstoffs aufweist.

5. Beschichtungsstoff nach Anspruch 4, **dadurch gekennzeichnet, dass** die Weißpigmente Titandioxid, Lithopone, Zinkoxid, Zinksulfid und deren Gemische sind.

6. Beschichtungsstoff nach einem der voranstehenden Ansprüche, **dadurch gekennzeichnet, dass** die difunktionellen, alkoxylierten Acrylat-Monomere ethoxylierte und propoxylierte Acrylat-Monomere sowie deren Gemische.

7. Beschichtungsstoff nach einem der voranstehenden Ansprüche, **dadurch gekennzeichnet, dass** die Acrylat-Oligomere Epoxyacrylate, Urethanacrylate, Polyetheracrylate und deren Gemische sind.

8. Beschichtungsstoff nach einem der voranstehenden Ansprüche, **dadurch gekennzeichnet, dass** die carbonylfunktionellen Acrylat- und Methacrylat-Oligomere carboxy-funktionelle Acrylat-Oligomere, carboxy-funktionelle Methacrylat-Oligomere, carboxylat-funktionelle Acrylat-Oligomere, carboxylat-funktionelle Methacrylat-Oligomere und deren Gemische sind.

9. Beschichtungsstoff nach einem der voranstehenden Ansprüche, **dadurch gekennzeichnet, dass** die Polyethylenglycol-Acrylate Polyethylenglycoldiacrylate sind.

10. Beschichtungstoff nach einem der voranstehenden Ansprüche, **dadurch gekennzeichnet, dass** die Photoinitiatoren (1-Hydroxycyclohexyl)phenylketon, 2-Hydroxy-2-methylpropiophenon, 1-[4-(2-Hydroxyethoxy)-phenyl]-2-hydroxy-2-methyl-1-propan-1-on, 2-Hydroxy-1-{4-[4-(2-hydroxy-2-methyl-propionyl)-benzyl]-phenyl}-2-methylpropan-1-on, 2-Benzyl-2-dimethylamino-1-(4-morpholinophenyl)-butanon-1, 2,4,6-Trimethylbenzoyl)-phenylphosphinoxid, Phenylglycoxylsäuremethylester, Ethyl-2,4,6-Trimethylbenzoyl-diphenylphosphinat, 2,4-Diethylthioxanthone, 1-Chlor-4-propoxythioxanthon und deren Gemische sind.

11. Beschichtungssystem zur Dekoration recycling-fähiger Kunststoffsubstrate umfassend eine Primerschicht und eine Musterschicht, wobei die Primerschicht zumindest eine Beschichtung hergestellt aus einem oder mehreren Beschichtungsstoffen nach einem der Ansprüche 1 bis 10 aufweist.

12. Beschichtungssystem nach Anspruch 11, **dadurch gekennzeichnet, dass** die Musterschicht ein oder mehrere Tintenbeschichtungen aufweist, welche aus zumindest einer UV-härtenden Tinte hergestellt sind.

13. Verfahren zur Bedruckung von recycling-fähigen Kunststoffsubstraten umfassend die Schritte
(a) Applikation von zumindest einem Primerbeschichtungsstoff nach einem der Ansprüche 1 bis 10 mittels Inkjet-Druckverfahren,
(b) Pinning der Primerbeschichtung durch Bestrahlung mit UV-Strahlung,
(c) Applikation von zumindest einer UV-härtenden Tinte mittels Inkjet-Druckverfahren,
(d) Aushärten aller Beschichtungen durch Bestrahlung mit UV-Strahlung.

14. Verfahren nach Anspruch 12, **dadurch gekennzeichnet**, zur Aushärtung UV-Strahlung mit Wellenlängen im Bereich zwischen 450 und 180 nm eingesetzt wird.

15. Verfahren nach einem der Ansprüche 12 oder 13, **dadurch gekennzeichnet, dass** PET-Substrate eingesetzt werden.

## Claims

1. Coating material for the production of a UV-curing primer coating containing at least
60 to 80 % by weight of at least one difunctional, alcoxylated acrylate monomer,
5 to 15 % by weight of at least one acrylate oligomer,
5 to 15 % of at least one carbonyl-functional acrylate and/or methacrylate oligomer or polyethylene glycol acrylate and/or polyethylene glycol methacrylate
and
1 to 10 % by weight of at least one photoinitiator each in relation to the total weight of the coating material.

2. Coating material according to claim 1, **characterized in that** the coating material further contains up to 1 % by weight of at least one surfactant in relation to the total weight of the coating material.

3. Coating material according to claim 2, **characterized in that** the surfactants are poly(organo)siloxanes and/or polyether-substituted polysiloxanes.

4. Coating material according to any one of claims 1 to 3, **characterized in that** the coating material further contains up to 10 % by weight of at least one white pigment in relation to the total weight of the coating material.

5. Coating material according to claim 4, **characterized in that** the white pigments are titanium dioxide, lithopones, zinc oxide, zinc sulphide and their mixtures.

6. Coating material according to one of the preceding claims, **characterized in that** the difunctional, alcoxylated acrylate monomers are ethoxylated and propoxylated acrylate monomers as well as their mixtures.

7. Coating material according to one of the preceding claims, **characterized in that** the acrylate oligomers are epoxy acrylates, urethane acrylates, polyether acrylates and their mixtures.

8. Coating material according to one of the preceding claims, charactized in that the carbonyl-functional acrylate and methacrylate oligomers are carboxy-functional acrylate oligomers, carboxy-functional methacrylate oligomers, carboxylate-functional acrylate oligomers, carboxylate-functional methacrylate oligomers and their mixtures,

9. Coating material according to one of the preceding claims, **characterized in that** the polyethylene glycol acrylates are polyethylene glycol diacrylates,

10. Coating material according to one of the preceding claims, **characterized in that** the photoinitiators are (1-hydroxycyclohexyl)phenyl ketone, 2-hydroxy-2-methylpropiophenone, 1-[4-(2-hydroxyethoxy)-phenyl]-2-hydroxy-2-methyl-1-propan-1-one, 2-hydroxy-1-{4-[4-(2-hydroxy-2-methylpropionyl)-benzyl]-phenyl}-2-methylpropan-1-one, 2-benzyl-2-dimethylamino-1-(4-morpholinophenyl)-butan-1-one, 2,4,6-trimethylbenzoyl-phenylphosphine oxide, phenylglyoxylic acid methyl ester, ethyl-2,4,6-trimethylbenzoyl-diphenylphosphinate, 2,4-diethyl thioxanthone, 1-chloro-4-propoxythioxanthone and their mixtures.

11. Coating system for the decoration of recyclable plastic substrates comprising a primer layer and a decorative layer, with the primer layer containing at least one coating made of at least one coating material according to any one of claims 1 to 10.

12. Coating system according to claim 11, **characterized in that** the decorative layer contains at least one ink coating which is made of at least one UV-curing ink.

13. Method for the printing of recyclable plastic substrates comprising the steps
(a) application of at least one primer coating material according to any one of claims 1 to 10 by means of Inkjet printing,
(b) pinning of the primer coating by means of radiation with UV rays,
(c) application of at least one UV-curing ink by means of inkjet printing,
(d) curing of all coatings by means of radiation with UV rays.

14. Method according to claim 12, **characterized in that** UV radiation with wavelengths in the range between 450 and 180 nm is used for curing.

15. Method according to one of the claims 12 or 13, **characterized in that** PET substrates are used.

## Revendications

1. Matériau de revêtement pour la production d'une couche d'apprêt durcissable aux UV comprenant au moins
60 à 80 % en poids d'un ou de plusieurs monomères d'acrylate alcoxylés difonctionnels,
5 à 15 % en poids d'un ou de plusieurs oligomères d'acrylate,
5 à 15 % en poids d'un ou de plusieurs oligomères d'acrylate et/ou de méthacrylate à fonction carbonyle ou acrylates de polyéthylène glycol et/ou méthacrylates de polyéthylène glycol et
1 à 10 % en poids d'un ou de plusieurs photo-initiateurs chaque quantité étant exprimée par rapport au poids total du matériau de revêtement.

2. Matériau de revêtement selon la revendication 1, **caractérisé en ce que** le matériau de revêtement comprend en outre jusqu'à 1 % en poids d'un ou de plusieurs tensioactifs par rapport au poids total du matériau de revêtement.

3. Matériau de revêtement selon la revendication 2, **caracterisé en ce que** les tensioactifs sont des poly(organo)siloxanes et/ou des polysiloxanes substitués avec polyéther.

4. Matériau de revêtement selon l'une quelconque des revendications 1 à 3, **caractérisé en ce que** le matériau de revêtement comprend en outre jusqu'à 10 % en poids d'un ou de plusieurs pigments blancs par rapport au poids total du matériau de revêtement.

5. Matériau de revêtement selon la revendication 4, **caractérisé en ce que** les pigments blancs sont du dioxyde de titan, des lithopones, de l'oxyde de zinc, du sulfure de zinc et des mélanges de ceux-ci.

6. Matériau de revêtement selon l'une des revendications précédentes, **caractérisé en ce que** les monomères d'acrylate alcoxylés difonctionnels sont des monomères d'acrylate éthoxylés et propoxylés ainsi que des mélanges de ceux-ci.

7. Matériau de revêtement selon l'une des revendications précédentes, **caractérisé en ce que** les oligomères d'acrylate sont des acrylates époxy, des acrylates d'uréthane, des acrylates de polyéther et des mélanges de ceux-ci.

8. Matériau de revêtement selon l'une des revendications précédentes, **caractérisé en ce que** les oligomères d'acrylate et de méthacrylate à fonction carbonyle sont des oligomères d'acrylate à fonction carboxy, des oligomères de méthacrylate à fonction carboxy, des oligomères d'acrylate à fonction carboxylate, des oligomères de méthacrylate à fonction de carboxylate et des mélanges de ceux-ci.

9. Matériau de revêtement selon l'une des revendications précédentes, **caractérise en ce que** les acrylates de polyéthylène glycol sont des diacrylates de polyéthylène glycol.

10. Matériau de revêtement selon l'une des revendications précédentes, **caractérisé en ce que** les photo-initiateurs sont de la (1-hydroxycyclohexyl)phényl cétone, 2-hydroxy-2-méthylpropiophénone, 1-[4-(2-hydroxyéthoxy)-phényl]-2-hydroxy-2-méthyl-1-propan-1-one, 2-hydroxy-1-{4-[4-(2-hydroxy-2-méthyl-propionyl)-benzyl]-phényl}-2-méthylpropan-1-one, 2-benzyl-2-diméthylamino-1-(4-morpholinophényl)-butanone-1, de l'oxyde de (2,4,6-triméthylbenzoyl)-phénylphosphine, de l'ester méthylique d'acide phénylglycolique, de l'éthyl-(2,4,6-triméthylbenzoyl)-diphénylphosphinate, de la 2,4-diéthyl thioxanthone, 1-chloro-4-propoxy thioxanthone et les mélanges de ceux-ci,

11. Système de revêtement pour la décoration de substrats de plastique recyclables comprenant une couche d'apprêt et une couche décorative, la couche d'apprêt comprenant au moins un revêtement fait d'un ou de plusieurs matériaux de revêtement selon l'une quelconque des revendications 1 à 10.

12. Système de revêtement selon la revendication 11, **caractérisé en ce que** la couche décorative comprend un ou plusieurs revêtements d'encre qui sont faits d'au moins une encre durcissant aux UV.

13. Procédé d'impression de substrats de plastique recyclables comprenant les étapes suivantes:
(a) application d'au moins un matériau de revêtement d'apprêt selon l'une quelconque des revendications 1 à 10 par procédé d'impression à jet d'encre,
(b) prégélification de la couche d'apprêt par irradiation ultraviolette,
(c) application d'au moins une encre durcissant aux UV par procédé d'impression à jet d'encre,
(d) durcissement de toutes les couches par irradiation ultraviolette.

14. Procédé selon la revendication 12, **caractérisé en ce que** de l'irradiation ultraviolette avec des longueurs d'onde se situant entre 450 et 180 nm est utilisée pour le durcissement.

15. Procédé selon l'une des revendications 12 ou 13, **caractérisé en ce que** des substrats PET sont utilisés,
